# EUROPEAN PATENT APPLICATION

(11) **EP 2 733 930 A1**
(43) Date of publication of application: **21.05.2014**
(21) Application number: 12869552.5
(22) Date of filing: 07.12.2012
(51) Int. Cl.: H04N 5/44

(54) **REMOTE CONTROL METHOD, DISPLAY CONTROL DEVICE, REMOTE CONTROLLER, AND SYSTEM**

(30) Priority: 24.02.2012 CN 201210043651
(71) Applicant: Shenzhen Skyworth Digital Technology Co. Ltd., Shenzhen, Guangdong 518000 (CN); Shenzhen Skyworth Software Co. Ltd., Shenzhen, Guangdong 518057 (CN)
(72) Inventor: WANG, Xiaohui, Nanshan Shenzhen Guangdong 518000 (CN); ZHOU, Guang, Nanshan Shenzhen Guangdong 518000 (CN); SHI, Chi, Nanshan Shenzhen Guangdong 518000 (CN)
(74) Representative: Johnson, Richard Alan
(86) International application number: PCT/CN2012/086120
(87) International publication number: WO 2013/123796

(57) **Abstract**

The invention discloses a remote control method, which comprises the following steps of: determining a current control mode of a remote controller, wherein the remote controller comprises a plurality of control modes; and when a remote control command of the remote controller is received, determining an operation mode for currently displayed contents according to the determined control mode and the remote control command. The invention also provides a display control device, the remote controller and a system. The invention aims to provide the remote control method, the display control device, the remote controller and the system, so as to implement switching of a plurality of control modes in the multi-mode remote controller and meet different requirements of various users.

## Description

### CROSS REFERENCE TO RELATED APPLICATIONS

The present application claims the benefit of priority to China patent application NO. 201210043651.X filed in the Chinese Patent Office on February 24, 2012 and entitled "REMOTE CONTROL METHOD, DISPLAY CONTROL DEVICE, REMOTE CONTROLLER, AND SYSTEM", the content of which is hereby incorporated by reference in its entirety.

### FIELD OF THE INVENTION

The present invention relates to technical field of remote control, and particularly to a remote control method, a display control device, a remote controller, and a system.

### BACKGROUND OF THE INVENTION

Nowadays, intelligent home appliances are becoming more and more common and configured with intelligent operating systems, bringing users more functions and experiences. Existing remote controllers that match them can be implemented in various ways, such as a touch input device remote controller with a display screen, a remote controller which can perceive the slippage of a touch input device, a touch input device remote controller which can achieve mouse function, and so on. However, the existing remote controllers have few achievable control modes, causing their functions to be inadequate. Furthermore, a good switching scheme for control modes of touch input device is lacked, and it is unable to realize switching among multiple control modes. Thus, it is difficult to meet different interaction needs of various users.

### SUMMARY OF THE INVENTION

One technical problem to be solved in embodiments of the present invention is to provide a remote control method, a display control device, and a remote controller, which are able to realize switching among multiple control modes in a multi-mode remote controller and meet different interaction needs of various users.

To solve the technical problem above, an embodiment of the present invention provides a remote control method, comprising:

determining a current control mode of a remote controller, the remote controller having multiple control modes;

determining a manner of operating a currently displayed content according to the determined control mode and a remote control instruction when receiving the remote control instruction of the remote controller;

Conducting an operation for the currently displayed content according to the determined operation manner.

Accordingly, an embodiment of the present invention further provides a display control device, comprising:

a mode determining module for determining a current control mode of a remote controller;

a receiving module for receiving a remote control instruction of the remote controller;

a control module for determining a manner of operating a currently displayed content according to the current control mode of the remote controller determined by the mode determining module and the remote control instruction received by the receiving module.

Accordingly, an embodiment of the present invention further provides a remote controller which has multiple control modes, wherein the remote controller specifically comprises:
a touch input device of a touchpad for identifying a touch input on a touch surface by a user;
a mechanical button; and
a mode switching button for providing selection and switching of control modes for a user.

Accordingly, an embodiment of the present invention further provides a remote control system, which comprises the remote controller and the display control device above.

Implementation of embodiments of the present invention can have the following beneficial effects.

The remote controller in one embodiment of the present invention comprises multiple control modes, and a user can conduct a switching among the multiple control modes. After a control mode of the remote controller is determined by a controlled equipment, namely, a display control device, such as a set top box and a television, different controls can be implemented according to a control instruction sent by the remote controller. Even though the remote controller sends an identical control instruction, since the control modes are different, the controlled equipment can make a corresponding display control. Thus, remote control functions of a common remote controller are enhanced, and remote control needs of users are satisfied.

### BRIEF DESCRIPTION OF THE DRAWINGS

Fig. 1 is a flowchart of a first embodiment of a remote control method in the present invention;
Fig. 2 is a flowchart of a second embodiment of a remote control method in the present invention;
Fig. 3 is a flowchart of a third embodiment of a remote control method in the present invention;
Fig. 4 is a flowchart of a fourth embodiment of a remote control method in the present invention;
Fig. 5 is a structure schematic diagram of a first embodiment of a display control device in the present invention;
Fig. 6 is a structure schematic diagram of a second embodiment of a display control device in the present invention;
Fig. 7 is a structure schematic diagram of a third embodiment of a display control device in the present invention;
Fig. 8 is a structure schematic diagram of a fourth embodiment of a display control device in the present invention.

### DETAILED DESCRIPTION OF THE INVENTION

In conjunction with the drawings in the embodiment of the present invention, a clear, complete description for the technical solutions in the embodiments of the present invention will be provided below. Apparently, the described embodiments are only part of the embodiments of the present invention instead of all embodiments. Based on the embodiment of the present invention, all other embodiments obtained by persons having ordinary skills in the field without creative work should all belong to the protection scope of the present invention.

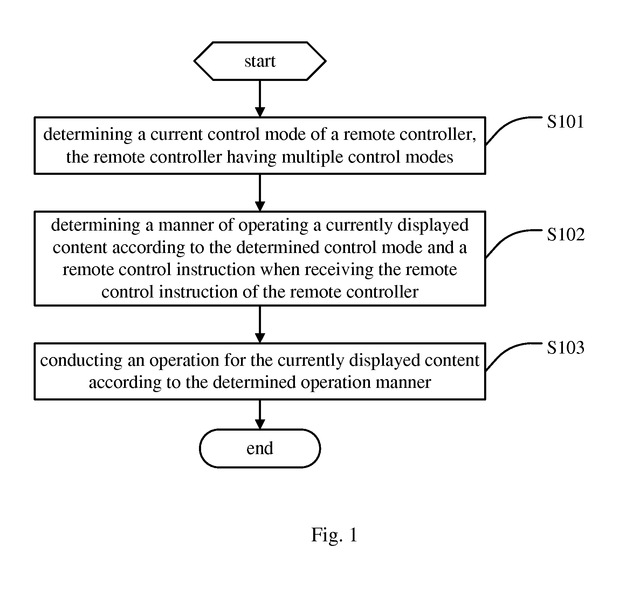

Referring to Fig.1, it is a flowchart of a first embodiment of a remote control method in the present invention. The method may comprises the following steps.

Step 101 is: determining a current control mode of a remote controller, the remote controller having multiple control modes.

Specifically, the current control mode of the remote controller comprises either one or more of a zoom in/out mode, a page drag mode, a fast forward and rewind mode, and a page flipping mode. In the embodiment of the present invention, it is supposed that the determined current control mode of the remote controller is a zoom in/out mode.

The current control mode of the remote controller in S101 may be determined by one or more of the following methods:

determining a control mode indicated by the operation command according to a button operation command of a mode button transmitted by a remote controller;

determining a control mode according to a combination button and the type of a currently displayed content;

determining the type of a currently displayed content, transmitting information of the determined type of the currently displayed content to the remote controller, receiving the button operation command sent by the remote controller when the remote controller conducts a corresponding button switching according to the determined type of the currently displayed content, and determining a current control mode of the remote controller.

Step 102 is: determining a manner of operating a currently displayed content according to the determined control mode and a remote control instruction when receiving the remote control instruction of the remote controller.

Specifically, in determining the current control mode of a remote controller in step S101, it is supposed that the determined current control mode of the remote controller is a zoom in/out mode. In this case, when a remote control instruction of the remote controller such as a control instruction for sliding up and down on a touch input device is received, it can be determined that the operation manner of the currently displayed content is conducting a zoom in/out operation according to the determined current control mode of the remote controller, e.g. the zoom in/out mode, and the remote control instruction, e.g. the control instruction for sliding up and down on a touch input device.

Step 103 is: conducting an operation for the currently displayed content according to the determined operation manner.

Specifically, a corresponding operation is conducted for the currently displayed content according to the determined operation manner of the currently displayed content in step S102. For example, when it is determined that the manner of operating the currently displayed content is to conduct a zoom in/out operation in step S102, a zoom in/out operation is conducted on the currently displayed content in the step S103.

When a remote control instruction of the remote controller is received in the embodiment of the present invention, a manner of operating a currently displayed content is determined according to the determined control mode of the remote controller and the remote control instruction, and a corresponding operation is made for the currently displayed content according to the determined operation manner. In the embodiment of the present invention, the remote controller can have remote control modes with a button, a mouse, a touch input device, and some other remote control modes, so as to realize a variety of switching methods among multiple control modes in the remote controller through a touch input device and/or buttons on the remote controller. Thus, a user can implement switching among the control modes and implement each of the complex operations with only a single hand. Thereby, different interaction needs of various users can be satisfied.

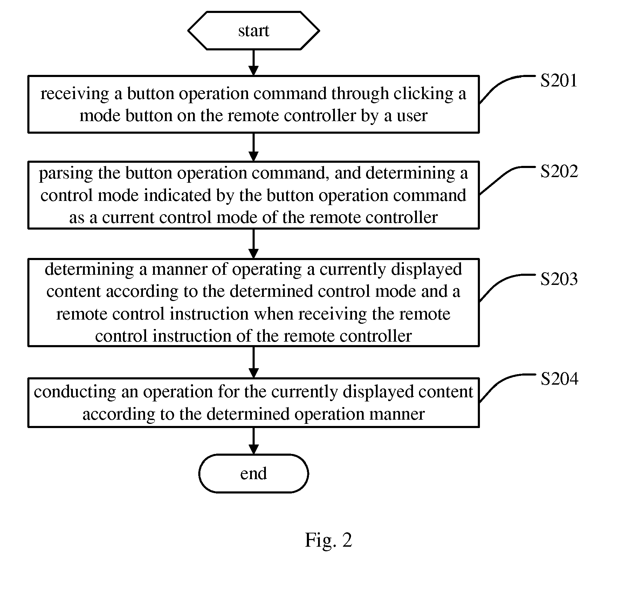

Referring to Fig.2, it is a flowchart of a second embodiment of a remote control method in the present invention. The method may comprise the following steps.

Step 201 is: receiving a button operation command through clicking a mode button on the remote controller by a user.

Specifically, mode buttons on the remote controller comprise a zoom in/out mode button, a page drag mode button, a fast forward and rewind mode button, and a page flipping mode button. In the step S201, a button operation command through clicking a mode button on the remote controller by a user is received. For example, when a user is browsing a webpage, if the webpage needs to be zoomed in or out, it is only necessary to click the zoom in/out button on the remote controller, which indicates a zoom in/out operation for the current content. In this case, a button operation command of clicking the zoom in/out mode button on the remote controller by a user is received in step S103.

Step 202 is: parsing the button operation command, and determining a control mode indicated by the button operation command as a current control mode of the remote controller.

Specifically, the button operation command is parsed according to the received button operation command of the mode button on the remote controller clicked by a user in the step S201 to determine which mode button is the one clicked by the user on the remote controller, thereby determining a control mode indicated by the button operation command as a current control mode of the remote controller. The mode buttons on the remote controller may comprise a zoom in/out mode button, a page drag mode button, a fast forward and rewind mode button, and a page flipping mode button. In step S201, for example, when a button operation command of clicking a zoom in/out mode button on the remote controller by a user is received, by parsing the button operation command of clicking the zoom in/out mode button on the remote controller by the user in the step S202, it can be determined that the control mode indicated by the button operation command is a zoom in/out mode. In this case, the current control mode of the remote controller is a zoom in/out mode.

Step 203 is: determining a manner of operating a currently displayed content according to the determined control mode and a remote control instruction when receiving the remote control instruction of the remote controller.

Step 204 is: conducting an operation for the currently displayed content according to the determined operation manner.

When a button operation command of a mode button on the remote controller is received in the embodiment of the present invention, the button operation command is parsed, and a control mode indicated by the button operation command is determined as a current control mode of the remote controller. The embodiment of the present invention provides a switching method among multiple control modes by clicking a mode button on a remote controller. Thus, a user can implement switching among the control modes and implement each of the complex operations with only a single hand. Thereby, different interaction needs of various users can be satisfied.

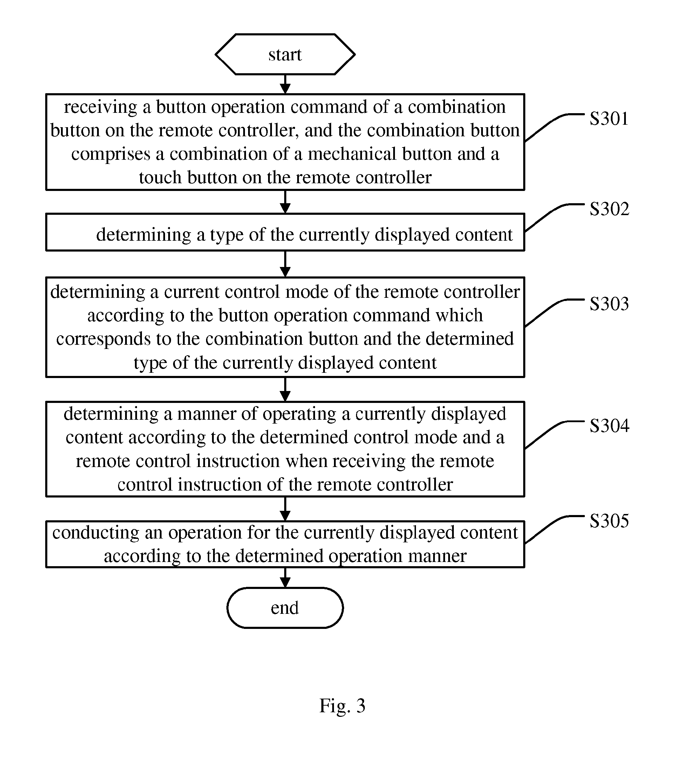

Refer to Fig.3, it is a flowchart of a third embodiment of a remote control method in the present invention. The method may comprise the following steps.

Step 301 is: receiving a button operation command of a combination button on the remote controller, and the combination button comprises a combination of a mechanical button and a touch button on the remote controller.

Specifically, a mechanical button refers to a mechanical button on the back surface or side surface of the remote controller in the embodiment of the present invention. The touch button may comprise a touchpad, a trackball, and an optical finger navigation (OFN). In step S301 of the embodiment, a button operation command of the combination button on the remote controller is received. The combination button comprises a combination of a mechanical button and a touch button on the remote controller. When a user presses the mechanical button on the back surface or side surface of the remote controller and conducts a touching operation on the touch button, a button operation of the combination button can be realized. Wherein, the touching operation on the touch button comprises sliding up and down, left and right.

Step 302 is: determining a type of the currently displayed content.

Specifically, the type of the currently displayed content mainly comprises types of browsing a webpage, browsing an image, broadcasting music, broadcasting streaming media, etc. In the embodiment of the present invention, it is supposed that the type of the currently displayed content is browsing a webpage.

Step 303 is: determining a current control mode of the remote controller according to the button operation command which corresponds to the combination button and the determined type of the currently displayed content.

Specifically, in step S301, the type of a button operation command of the combination button on the remote controller may be different due to the different types of the currently displayed content. For example, when a user is browsing an image, the user may slide a finger up and down, left and right on the touch button while pressing the mechanical button on the back surface or side surface of the remote controller, sliding up indicating zooming in the image, sliding down indicating zooming out the image, and sliding left or right indicating switching between images. In this case, the current control mode of the remote controller is a zoom in/out mode and a page flipping mode. For another example, when broadcasting music, the user may slide a finger up and down, left and right on the touch button while pressing the mechanical button on the back surface or side surface of the remote controller, sliding up indicating an increase of the sound of the music, sliding down indicating decrease of the sound of the music, sliding left indicating rewind, and sliding right indicating fast forward. In this case, the current control mode of the remote controller is a zoom in/out mode and a fast forward and rewind mode. Therefore, when determining the current control mode of the remote controller, the current control mode of the remote controller can be determined only when the type of the currently displayed content is determined and the button operation command corresponding to the button combination is analyzed based on the determined type of the currently displayed content. For example, when it is determined that the type of the currently displayed content is browsing an image, and the button operation command corresponding to the button combination is, for example, sliding up and down, left and right on the touch button while pressing the mechanical button on the back surface or side surface of the remote controller, sliding up indicating zooming in the image, sliding down indicating zooming out the image, and sliding left or right indicating switching between images, it can be determined that the current control mode of the remote controller is a zoom in/out mode and a page mode.

Step 304 is: determining a manner of operating a currently displayed content according to the determined control mode and a remote control instruction when receiving the remote control instruction of the remote controller.

Step 305 is: conducting an operation for the currently displayed content according to the determined operation manner.

It should be noted that during the operation of the combination button, if the button of the mechanical button on the back surface or side surface of the remote controller is released, the finger sliding operation of up and down, left and down conducted on the touch button becomes a standard mouse operation.

In the embodiment of the present invention, by receiving a button operation command of a combination button on the remote controller and determining the type of the currently displayed content, such as browsing a webpage, browsing an image, broadcasting music, broadcasting streaming media, etc, the current control mode of the remote controller is determined according to the button operation command which corresponds to the combination button and the determined type of the currently displayed content. In the embodiment of the present invention, it is provided a switching method among multiple control modes by combining operations on a touch button and buttons on the back surface or side surface of a remote controller. Thus, a user can implement switching among the control modes and implement each of the complex operations with only a single hand. Thereby, different interaction needs of various users can be satisfied.

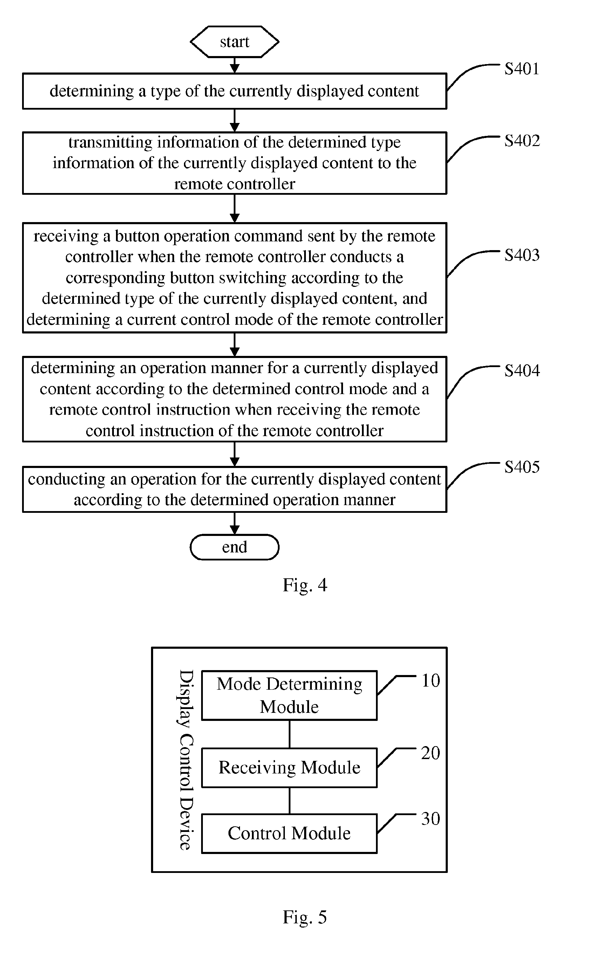

Referring to Fig.4, it is a flowchart of a fourth embodiment of a remote control method in the present invention. The method may comprise the following steps.

Step 401 is: determining a type of the currently displayed content.

Specifically, the types of a currently displayed content mainly comprise browsing a webpage, browsing an image, broadcasting music, broadcasting streaming media, etc. In the embodiment of the present invention, it is supposed that the type of the currently displayed content is browsing a webpage.

Step 402 is: transmitting information of the determined type information of the currently displayed content to the remote controller.

Specifically, according to the determined type of the currently displayed content in S401, e.g. the determined type of the current display content is browsing a webpage, the display control device transmits information of the determined type of the currently displayed content to the remote controller in S402. The remote controller obtains the type of a currently displayed content such as browsing a webpage.

Step 403 is: receiving a button operation command sent by the remote controller when the remote controller conducts a corresponding button switching according to the determined type of the currently displayed content, and determining a current control mode of the remote controller.

Specifically, the remote controller issues a button operation command when conducting a corresponding button switching according to the determined type of the currently displayed content. For example, when the determined type of the currently displayed content received by the remote controller is browsing a webpage, the remote controller issues a button operation command when conducting a corresponding button switching such as sliding left or right on the touch input device to transmit a page up or page down instruction. The touch input device receives the page up or page down instruction transmitted by the remote controller and determines that the current control mode of the remote controller is browsing a webpage.

Step 404 is: determining a manner of operating a currently displayed content according to the determined control mode and a remote control instruction when receiving the remote control instruction of the remote controller.

Step 405 is: conducting an operation for the currently displayed content according to the determined operation manner.

It should be noted that after exiting the exchange switching mode of the bidirectional communication, the finger sliding operation of up and down, left and right on the touch button becomes a standard mouse operation.

In the embodiment of the present invention, the display control device transmits information of the type of a currently displayed content to the remote controller, and receives the button operation command sent by the remote controller when the remote controller conducts a corresponding button switching according to the determined type of the currently displayed content, so as to determine a current control mode of the remote controller. In the embodiment of the present invention, it is provided a bidirectional communication to achieve a dynamic switching among multiple control modes in the remote controller, thereby different interaction needs of various users can be satisfied.

Referring to Fig.5, it is a structure schematic diagram of a first embodiment of a display control device in the present invention. As shown in Figure 5, the remote controller comprises: a mode determining module 10, a receiving module 20 and a control module 30.

a mode determining module 10 is configured to determine a current control mode of a remote controller.

Specifically, the current control modes of the remote controller may comprise one or more of a zoom in/out mode, a page drag mode, a fast forward and rewind mode, and a page flipping mode. The mode determining module 10 is used for determining a current control mode of the remote controller.

A receiving module 20 is configured to receive a remote control instruction of the remote controller.

Specifically, the receiving module 20 receives an issued remote control instruction according to the current control mode of the remote controller determined by the mode determining module 10, such as a control instruction for sliding up and down, left and right on a touch input device, a button operation command of a combination button on the remote controller. The button operation command of the combination button on the remote controller comprises a control instruction for sliding up and down, left and right on the touch button while pressing the mechanical button on the back surface or side surface of the remote controller.

A control module 30 is configured to determine a manner of operating a currently displayed content according to the mode determining module 10 and the receiving module 20, and conduct a control operation for the currently displayed content.

In the embodiment of the present invention, the current control mode of the remote controller comprises one or more of a zoom in/out mode, a page drag mode, a fast forward and rewind mode, and a page flipping mode. The mode determining module 10 in the embodiment of the present invention determines a current control mode of the remote controller, the receiving module 20 receives a remote control instruction of the remote controller, the control module 30 determines a manner of operating a currently displayed content according to the mode determining module 10 and receiving module 20, and conducts a control operation for the currently displayed content according to the determined operation manner. For example, when the current control mode of the remote controller determined by the mode determining module 10 is a zoom in/out mode , the remote control instruction of the remote controller received by the receiving module 20 is a control instruction for sliding up and down on a touch input device, and the manner of operating the currently displayed content determined by the control module 30 according to the mode determining module 10 and receiving module 20 is zooming in/out, then conducting a zoom in/out control operation for the currently displayed content. The remote controller in the embodiment of the present invention has multiple control modes, comprising a button control mode, a mouse control mode, a touch input device control mode. Therefore, it can be realized that a variety of switching methods among multiple control modes in a remote controller through a touch input device and/or a button on the remote controller. Thus, a user can implement switching among the control modes and implement each of the complex operations with only a single hand. Thereby, different interaction needs of various users can be satisfied.

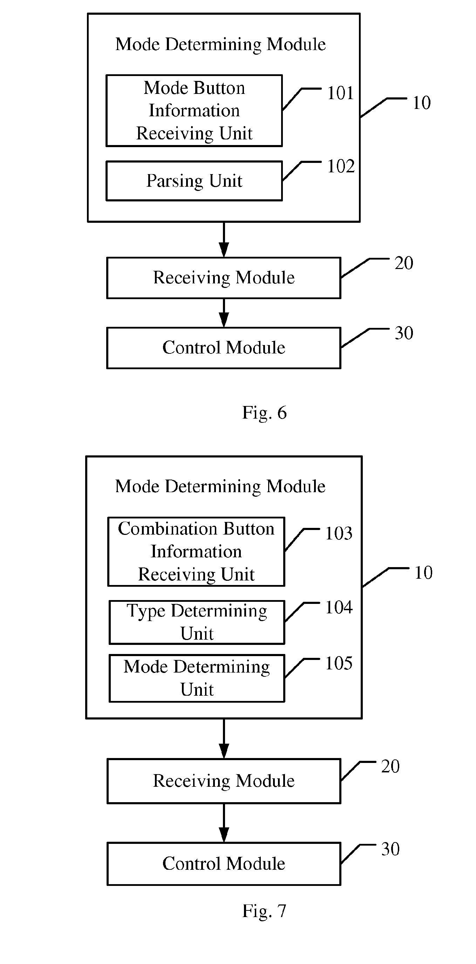

Referring to Fig.6, it is a structure schematic diagram of a second embodiment of a display control device in the present invention. The remote controller comprises the receiving module 20 and the control module 30 in above Fig.5. In one embodiment, the determining module 10 comprise: a mode button information receiving unit 101 and a parsing unit 102.

a mode button information receiving unit 101 is configured to receive a button operation command through clicking a mode button on the remote controller by a user.

Specifically, mode buttons on the remote controller may comprise a zoom in/out mode button, a page drag mode button, a fast forward and rewind mode button, a page flipping mode button. The mode button information receiving unit 101 receives a button operation command through clicking a mode button on the remote controller by a user, for example, a user clicking a zoom in/out mode on the remote controller.

A parsing unit 102 is configured to parse the button operation command of the mode button on the remote controller received by the mode button information receiving unit 101, and determine a control mode indicated by the button operation command as a current control mode of the remote controller.

Specifically, in the embodiment of the present invention, the mode buttons on the remote controller may comprise a zoom in/out mode button, a page drag mode button, a fast forward and rewind mode button, and a page flipping mode button. The mode button information receiving unit 101 receives a button operation command through clicking a mode button on the remote controller by a user. For example, when the mode button information receiving unit 101 receives a button operation command of a zoom in/out mode button on the remote controller clicked by a user, the parsing unit 102 parses the button operation command of a zoom in/out mode button on the remote controller received by the mode button information receiving unit 101, and determine the control mode indicated by the button operation command of a zoom in/out mode button is a zoom in/out mode. Take the zoom in/out mode as a current control mode of the remote controller, which means, the current control mode of the remote controller is a zoom in/out mode.

The mode buttons on the remote controller may comprise a zoom in/out mode button, a page drag mode button, a fast forward and rewind mode button, and a page flipping mode button in the embodiment of the present invention. The mode button information receiving unit 101 receives a button operation command through clicking a mode button on the remote controller by a user, the parsing unit 101 parses the button operation command of the mode button on the remote controller received by the mode button information receiving unit 101, and determines a control mode indicated by the button operation command as a current control mode of the remote controller. In the embodiment of the present invention, it is provided a switching method among multiple control modes by clicking a mode button on a remote controller. Thus, a user can implement switching among the control modes and implement each of the complex operations with only a single hand. Thereby, different interaction needs of various users can be satisfied.

Referring to Fig.7, it is a structure schematic diagram of a third embodiment of a display control device in the present invention. The remote controller comprises the receiving module 20 and the control module 30 in above Fig.5. In one embodiment, the determining module comprise: a combination button information receiving unit 103, a type determining unit 104 and a type determining unit 105.

a combination button information receiving unit 103 is configured to receive a button operation command of a combination button on the remote controller.

Specifically, in the embodiment of the present invention the combination button comprises a combination of a mechanical button and a touch button on the remote controller. When a user presses the mechanical button on the back surface or side surface of the remote controller and conducts a touching operation on the touch button, a button operation of the combination button can be realized. Wherein, the touching operation on the touch button comprises sliding up and down, left and right. The mechanical button refers to a mechanical button on the back surface or side surface of the remote controller, and the touch button comprises a touchpad, a trackball and a optical finger navigation (OFN). In the embodiment of the present invention, the combination button information receiving unit 103 is used for receiving a button operation command of a combination button on the remote controller.

A type determining unit 104 is configured to determine a type of a currently displayed content.

Specifically, in the embodiment of the present invention, the type of a currently displayed content comprises a type of browsing a webpage, browsing an image, broadcasting music, broadcasting streaming media, etc. The type determining unit 104 is used for determining a type of the currently displayed content, as determining the type of the currently displayed content is browsing a webpage.

A type determining unit 105 is configured to determine a current control mode of the remote controller according to the button operation command of the combination button received by the combination button information receiving unit 103 and the type of the currently displayed content received by the type determining unit 104.

Specifically, the button operation command of the combination button on the remote controller received by the combination button information receiving unit 103 is different due to the different types of the currently displayed content. For example, when the type determining unit 104 determining the type of the currently displayed content is browsing an image, and the button operation command of the combination button, for example, sliding up and down, left and right on the touch button, is received by the combination button information receiving unit 103, the sliding up indicating zooming in the image, the sliding down indicating zooming out the image, and the sliding left or right indicating the switching between images. In this case, the current control mode of the remote controller is a zoom in/out mode and a page flipping mode. For another example, when the type determining unit 104 determines the type of the currently displayed content is broadcasting music, and the button operation command of the combination button, for example, sliding up and down, left and right on the touch button, is received by the combination button information receiving unit 103, a sliding up indicating an increase of the sound of the music, a sliding down indicating a decrease of the sound of the music, a sliding left indicating rewind, and a sliding right indicating fast forward. In this case, the current control mode of the remote controller is a zoom in/out mode and a fast forward and rewind mode. Therefore, when the mode determining unit 105 determines the current control mode of the remote controller, the current control mode of the remote controller can be determined only in combination with the button operation command of the button combination received by the combination button information receiving unit 103 and the type of the currently displayed content received by the type determining unit 104.

It should be noted that during the operation of the combination button, if the button of the mechanical button on the back surface or side surface of the remote controller is released, the finger sliding operation of up and down, left and right conducted on the touch button becomes a standard mouse operation.

In the embodiment of the present invention, according to a button operation command of a combination button on the remote controller received by the combination button information receiving unit 103 and a type of the currently displayed content determined by the type determining unit 104, such as browsing a webpage, browsing an image, broadcasting a music, broadcasting a streaming media, etc, a current control mode of the remote controller is determined. In the embodiment of the present invention, it is provided a switching method among multiple control modes by clicking a mode button on a remote controller. Thus, a user can implement switching among the control modes and implement each of the complex operations with only a single hand. Thereby, different interaction needs of various users can be satisfied.

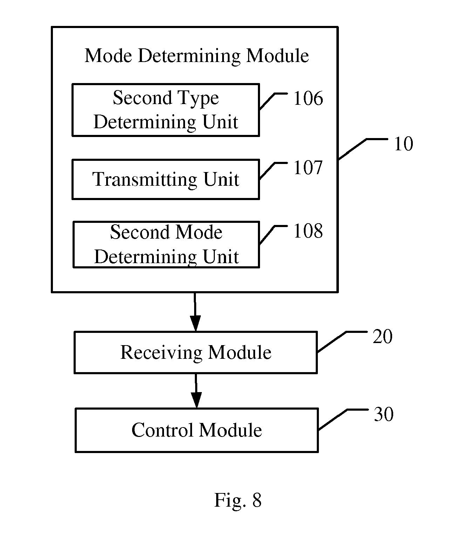

Referring to Fig.8, it is a structure schematic diagram of a second embodiment of a display control device in the present invention. The remote controller comprises the receiving module 20 and the control module 30 in above Fig.5. In the present embodiment, the determining module comprises: a second type determining unit 106, a transmitting unit 107 and a second mode determining unit 108.

a second type determining unit 106 is configured to determine a type of the currently displayed content.

Specifically, the types of a currently displayed content mainly comprises browsing a webpage, browsing an image, broadcasting music, broadcasting streaming media, etc. It is supposed that the second type determining unit 106 for determining the type of the currently displayed content is browsing a webpage.

A transmitting unit 107 is configured to transmit the type information of the currently displayed content determined by the second type determining unit 106 to the remote controller.

Specifically, according to the type of the currently displayed content determined by the second type determining unit 106 such as browsing a webpage, the type information of the currently displayed content determined by the second type determining unit 106 is transmitted to the remote controller, and the remote controller obtains the type of a currently displayed content such as browsing a webpage.

A second mode determining unit 108 is configured to receive the button operation command sent by the remote controller when the remote controller conducts a corresponding button switching according to the determined type of the currently displayed content, and determine a current control mode of the remote controller.

Specifically, the transmitting unit 107 transmits information of the type for the currently displayed content determined by the second type determining unit 106 to the remote controller. For example, when the transmitting unit 107 transmits a browsing webpage determined by the second type determining unit 106 to the remote controller, the remote controller issues a button operation command when conducting a corresponding button switching according to the received type for the currently displayed content such as browsing a webpage. For example, if sliding left or right on the touch input device, a page up or page down instruction is transmitted to achieve a webpage switching. The second mode determining unit 108 determines that the current control mode of the remote controller is browsing a webpage according to the received page up or page down instruction transmitted by the remote controller.

It should be noted that after exiting the exchange switching mode of bidirectional communication, the finger sliding operation of up and down, left and right conducted on the touch button becomes a standard mouse operation.

The remote controller of the present invention will be described in detail as the following.

The remote controller in the embodiment of the present invention may comprise a mainboard, various types of common buttons with a shell as well as an infrared emitter, etc. Specifically, the remote controller further comprising:

a touch input device for identifying a touch input on a touch surface by a user.

Specifically, in the embodiment of the invention, the touch input device may comprise a touchpad, a trackball, and a optical finger navigation (OFN). The touch input device is used for identifying a touch input on a touch surface by a user.

A mechanical button may comprise a mechanical button on the back surface or side surface of the remote controller. These mechanical buttons are also connected with the motherboard in the remote controller.

A mode switching button, which is used for identifying a button operation on a mode button of the remote controller by a user. The mode button comprises a zoom in/out mode, a page drag mode, a fast forward and rewind mode, and a page flipping mode. When a user clicks the mode button on the remote controller, a manner of operating the currently displayed content can be determined. These mode switching buttons can be some specific mechanical buttons or be set on the touch input device.

The remote controller of the present invention will be described in detail as the following.

The remote control system in one embodiment of the present invention comprising: a remote controller and a display control device, the display control device can specifically be a device such as a television or a set-top box.

The remote controller is used for a user to conduct various operations for the display control device.

Specifically, the remote controller comprises a touch input device such as a touchpad, a trackball, an optical finger navigation (OFN). With the remote controller, a user can conduct various operations for the display device, such as page dragging, image switching, webpage or image zooming in/out, etc.

A display control device is used for receiving users' various operation commands on the remote controller, and conducting various operations for the currently displayed content. The display control device comprises a television or a set-top box connected with a television.

The remote controller in the embodiment of the present invention comprises multiple control modes, and a user can conduct a switching among the multiple control modes. After a control mode of the remote controller is determined by a controlled equipment, namely, a display control device, such as a set-top box or a television, different controls can be performed according to the control instruction sent by the remote controller. Even though the control instructions sent by the remote controller are the same, due to different control modes, corresponding display controls can be performed on the controlled equipment. Therefore, remote control functions of a common remote controller are enhanced and remote control demands of users are satisfied.

A person having ordinary skills in the field will understand that all or part of the processes in the method embodiments above can be achieved by a computer program instructing relevant hardware. The program may be stored in a computer readable storage medium, and when executed, the program may implement the processes in the above embodiments of the methods. The storage medium may be a magnetic disk, an optical disk, a read-only memory (ROM), a random access memory (RAM), etc.

What are disclosed above are only preferred embodiments of the present invention and should not limit the scope of the present invention. A person having ordinary skills in the field can understand that any equivalent variation implementing all or part of the processes in the above embodiments according to the claim of the present invention still belongs to the coverage scope of the invention.

## Claims

1. A remote control method, which is **characterized in that**, the method comprises:
determining a current control mode of a remote controller, the remote controller having multiple control modes;
determining a manner of operating a currently displayed content according to the determined control mode and a remote control instruction when receiving the remote control instruction of the remote controller;
conducting an operation for the currently displayed content according to the determined operation manner.

2. The method of claim 1, which is **characterized in that**, the control mode comprises one or more of a zoom in/out mode, a page drag mode, a fast forward and rewind mode, and a page flipping mode.

3. The method of claim 2, which is **characterized in that**, determining the current control mode of the remote controller comprises:
receiving a button operation command through clicking a mode button on the remote controller by a user;
parsing the button operation command, and determining a control mode indicated by the button operation command as the current control mode of the remote controller.

4. The method of claim 2, which is **characterized in that**, determining the current control mode of the remote controller comprises:
receiving a button operation command of a combination button on the remote controller, wherein the combination button comprises a combination of a mechanical button and a touch button on the remote controller;
determining a type of the currently displayed content; and
determining a current control mode of the remote controller according to the button operation command which corresponds to the combination button and the determined type of the currently displayed content.

5. The method of claim 2, which is **characterized in that**, determining the current control mode of the remote controller comprises:
determining a type of the currently displayed content;
transmitting information of the determined type of the currently displayed content to the remote controller;
receiving a button operation command sent by the remote controller when the remote controller conducts a corresponding button switching according to the determined type of the currently displayed content, and determining a current control mode of the remote controller.

6. The method of claim 4, which is **characterized in that**, the touch button comprises:
a touchpad, a trackball, and an optical finger navigation OFN.

7. A display control device, which is **characterized in that**, the device comprises:
a mode determining module for determining a current control mode of a remote controller;
a receiving module for receiving a remote control instruction of the remote controller;
a control module for determining a manner of operating a currently displayed content according to the current control mode of the remote controller determined by the mode determining module and the remote control instruction received by the receiving module.

8. The device of claim 7, which is **characterized in that**, the mode determining module comprises:
a mode button information receiving unit for receiving a button operation command through clicking a mode button on the remote controller by a user;
a parsing unit for parsing the button operation command received by the mode button information receiving unit, and determining a current control mode of the remote controller.

9. The device of claim 7, which is **characterized in that**, the mode determining module comprises:
a combination button information receiving unit for receiving the button operation command of a combination button on the remote controller;
a type determining unit for determining a type of the currently displayed content;
a mode determining unit for determining a current control mode of the remote controller according to the button operation command of the combination button received by the combination button information receiving unit and the determined type of the currently displayed content.

10. The device of claim 7, which is **characterized in that**, the mode determining module comprises:
a second type determining unit for determining a type of the currently displayed content;
a transmitting unit for transmitting information of the type of the currently displayed content determined by the second type determining unit to the remote controller;
a second mode determining unit for receiving a button operation command sent by the remote controller when the remote controller conducts a corresponding button switching according to the determined type of the currently displayed content, and determining a current control mode of the remote controller.

11. The device of claim 7-10, which is **characterized in that**, the display control device comprises a television or a set-top box connected with the television.

12. A remote controller, which is **characterized in that**, the remote controller has multiple control modes, and the remote controller specifically comprises:
a touch input device of a touchpad for identifying a touch input on a touch surface by a user;
a mechanical button; and
a mode switching button for providing selection and switching of control modes for a user.

13. The remote controller of claim 12, which is **characterized in that**, the mode switching button comprises a zoom in/out button, a page drag button, a fast forward and rewind button, and a page flipping button.

14. A remote control system, which is **characterized in that**, the system comprises:
a remote controller of claim 12 or 13 and a display control device of claim 7-11.
